# EUROPEAN PATENT APPLICATION

(11) **EP 4 451 749 A1**
(43) Date of publication of application: **23.10.2024**
(21) Application number: 22906508.1
(22) Date of filing: 12.12.2022
(51) Int. Cl.: H04W 52/14

(54) **PRACH TRANSMISSION METHOD AND APPARATUS, AND TERMINAL**

(30) Priority: 16.12.2021 CN 202111547853
(71) Applicant: VIVO MOBILE COMMUNICATION CO., LTD., Dongguan, Guangdong 523863 (CN)
(72) Inventor: PAN, Xueming, Dongguan, Guangdong 523863 (CN); WU, Kai, Dongguan, Guangdong 523863 (CN); TAMRAKAR, Rakesh, Dongguan, Guangdong 523863 (CN)
(74) Representative: Lavoix
(86) International application number: PCT/CN2022/138402
(87) International publication number: WO 2023/109763

(57) **Abstract**

This application discloses a PRACH transmission method and apparatus, and a terminal, and relates to the field of communications technologies. The PRACH transmission method in embodiments of this application includes: A terminal determines transmit power of a physical random access channel PRACH repetition transmission based on a target parameter (201). The target parameter includes at least one parameter for the PRACH repetition transmission. The terminal performs the PRACH repetition transmission based on the transmit power of the PRACH repetition transmission (202).

## Description

### CROSS-REFERENCE TO RELATED APPLICATIONS

This application claims priority to Chinese Patent Application No. 202111547853.3 filed on December 16, 2021 in China, which is incorporated herein by reference in its entirety.

### TECHNICAL FIELD

This application relates to the field of communications technologies, and in particular, to a PRACH transmission method and apparatus, and a terminal.

### BACKGROUND

Physical random access channel (Physical Random Access Channel, PRACH) repetition transmission is a method for increasing PRACH coverage. User equipment (User Equipment, UE) usually selects the PRACH repetition transmission in a case of poor coverage. All terminals in a cell are comprehensively considered in terms of initial power of an existing PRACH transmission, including coverage-limited and coverage-unlimited terminals. The initial power usually does not reach the highest power, and may reach a maximum only after a plurality of retransmissions and power ramping.

Currently, it is not clear how transmit power of each PRACH transmission in the PRACH repetition transmission is determined.

### SUMMARY

Embodiments of this application provide a PRACH transmission method and apparatus, and a terminal, to resolve a problem of determining a transmit power of each PRACH transmission in PRACH repetition transmission.

According to a first aspect, a PRACH transmission method is provided, including:

A terminal determines transmit power of a physical random access channel PRACH repetition transmission based on a target parameter. The target parameter includes at least one parameter for the PRACH repetition transmission.

The terminal performs the PRACH repetition transmission based on the transmit power of the PRACH repetition transmission.

According to a second aspect, a PRACH transmission apparatus is provided, including:
a determining module, configured to determine, based on a target parameter, transmit power of a physical random access channel PRACH repetition transmission, where the target parameter includes at least one parameter for the PRACH repetition transmission; and
a transmission module, configured to perform the PRACH repetition transmission based on the transmit power of the PRACH repetition transmission.

According to a third aspect, a terminal is provided, including a processor and a memory. The memory stores a program or instructions executable on the processor. The program or the instructions, when executed by the processor, implement steps of the method according to the first aspect.

According to a fourth aspect, a terminal is provided, including a processor and a communication interface. The processor is configured to determine, by the terminal, transmit power of a physical random access channel PRACH repetition transmission based on a target parameter. The target parameter includes at least one parameter for the PRACH repetition transmission. The communication interface is configured to perform the PRACH repetition transmission based on the transmit power of the PRACH repetition transmission.

According to a fifth aspect, a communication system is provided, including a terminal and a network side device. The terminal may be configured to perform steps of the PRACH transmission method according to the first aspect.

According to a sixth aspect, a readable storage medium is provided, having a program or instructions stored thereon. The program or the instructions, when executed by a processor, implement steps of the method according to the first aspect.

According to a seventh aspect, a chip is provided, including a processor and a communication interface. The communication interface is coupled to the processor. The processor is configured to run a program or instructions to implement steps of the method according to the first aspect.

According to an eighth aspect, a computer program/a program product is provided, stored in a storage medium. The computer program/the program product is executed by at least one processor to implement steps of the method according to the first aspect.

In embodiments of this application, the terminal determines the transmit power of the PRACH repetition transmission based on the target parameter. The target parameter includes the at least one parameter for the PRACH repetition transmission. The terminal performs the PRACH repetition transmission based on the transmit power of the PRACH repetition transmission. The terminal may determine transmit power of a PRACH transmission in the PRACH repetition transmission based on the target parameter, to improve transmission performance.

### BRIEF DESCRIPTION OF THE DRAWINGS

FIG. 1 is a diagram of a structure of a network system according to an embodiment of this application;
FIG. 2 is a flowchart of a PRACH transmission method according to an embodiment of this application;
FIG. 3a is a first schematic diagram of path loss estimation time in a PRACH repetition transmission according to an embodiment of this application;
FIG. 3b is a second schematic diagram of path loss estimation time in a PRACH repetition transmission according to an embodiment of this application;
FIG. 4 is a diagram of a structure of a PRACH transmission apparatus according to an embodiment of this application;
FIG. 5 is a diagram of a structure of a communication device according to an embodiment of this application; and
FIG. 6 is a diagram of a structure of a terminal according to an embodiment of this application.

### DETAILED DESCRIPTION

The technical solutions in embodiments of this application are clearly described below with reference to the accompanying drawings in embodiments of this application. Apparently, the described embodiments are merely some rather than all of embodiments of this application. All other embodiments obtained by a person of ordinary skill in the art based on embodiments of this application fall within the protection scope of this application.

In the specification and claims of this application, the terms "first", "second", and the like are used to distinguish similar objects, but are not used to describe a specific sequence or order. It should be understood that the terms used in such a way are interchangeable in a proper case, so that embodiments of this application can be implemented in an order different from the order shown or described herein. In addition, the objects distinguished by "first" and "second" are usually of a same type, without limiting a quantity of objects. For example, there may be one or more first objects. In addition, "and/or" in the specification and the claims means at least one of the connected objects, and the character "I" generally indicates an "or" relationship between the associated objects.

It should be noted that the technology described in embodiments of this application is not limited to a long term evolution (Long Term Evolution, LTE)/LTE-advanced (LTE-Advanced, LTE-A) system, and may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in embodiments of this application are often used interchangeably, and the described technologies may be used both for the systems and radio technologies mentioned above as well as to other systems and radio technologies. The following descriptions describe a new radio (New Radio, NR) system for illustrative purposes, and NR terms are used in most of the descriptions below. However, these technologies may also be applied to applications other than NR system applications, such as a 6th generation (6th Generation, 6G) communication system.

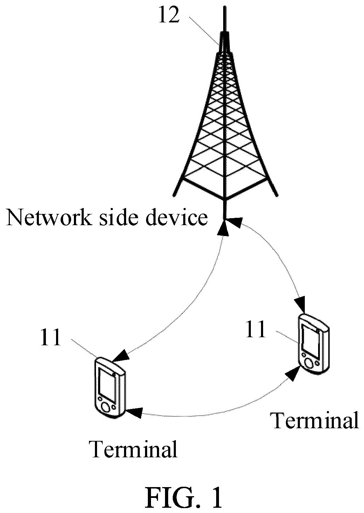

FIG. 1 is a block diagram of a wireless communication system to which an embodiment of this application may be applied. The wireless communication system includes a terminal 11 and a network side device 12. The terminal 11 may be a terminal side device, such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that a same technical effect is achieved, the base station is not limited to a specific technical term. It should be noted that in embodiments of this application, a base station in an NR system is merely used as an example, and a specific type of the base station is not limited.

The following describes in detail a PRACH transmission method provided in embodiments of this application by using some embodiments and application scenarios thereof with reference to the accompanying drawings.

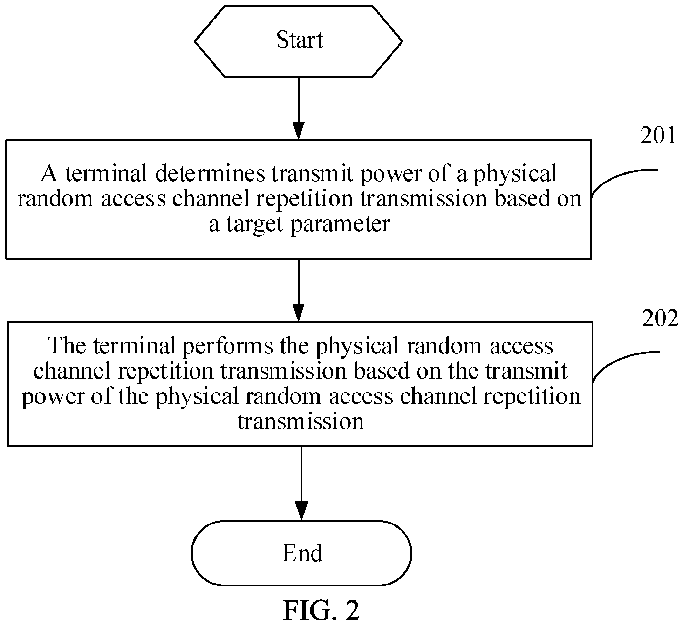

Refer to FIG. 2. FIG. 2 is a flowchart of a PRACH transmission method according to an embodiment of this application. The PRACH transmission method includes the following steps:
Step 201: A terminal determines transmit power of a PRACH repetition transmission based on a target parameter. The target parameter includes at least one parameter for the PRACH repetition transmission.

A physical random access channel (Physical Random Access Channel, PRACH) transmission in a random access procedure may include a PRACH initial transmission and a PRACH retransmission. The PRACH initial transmission may include a PRACH repetition (repetition) transmission, that is, a plurality of PRACH transmissions. The PRACH retransmission (retransmission) may alternatively include a PRACH repetition transmission.

The parameter included in the target parameter may be a parameter for the PRACH retransmission, to be specific, the parameter for the PRACH repetition transmission is the same as the parameter for the PRACH retransmission, and/or a parameter specially for the PRACH repetition transmission. This is not limited herein.

The terminal determine transmit power of each PRACH transmission in the PRACH repetition transmission based on the target parameter.

Step 202: The terminal performs the PRACH repetition transmission based on the transmit power of the PRACH repetition transmission.

In this embodiment of this application, the terminal determines the transmit power of the PRACH repetition transmission based on the target parameter. The target parameter includes the at least one parameter for the PRACH repetition transmission. The terminal performs the PRACH repetition transmission based on the transmit power of the PRACH repetition transmission. The terminal may determine transmit power of a PRACH transmission in the PRACH repetition transmission based on the target parameter, to improve transmission performance.

In an embodiment of this application, the at least one parameter for the PRACH repetition transmission includes at least one of the following:
(1) A first target power level at which a network side device expects to receive the PRACH repetition transmission.
   The first target power level may be configured by the network side device. The first target power level may be a parameter specially for the PRACH repetition transmission.
(2) A first power ramping step for the PRACH repetition transmission. The first power ramping step may be a parameter specially for the PRACH repetition transmission, for example, a newly added parameter for the PRACH repetition transmission.

Further, the first power ramping step includes: a power ramping step configured for the PRACH transmission in a case that the terminal sends a message 3 (msg3) repetition request; or a power ramping step for a preferred random access process in a case that the terminal does not perform the PRACH repetition transmission. In other words, the first power ramping step is the same as a power ramping step configured for the PRACH transmission in a case that the terminal sends a msg3 repetition request. Alternatively, the first power ramping step is the same as a power ramping step that has a high priority and that is configured in a case that the terminal does not perform the PRACH repetition transmission. The power ramping step having a high priority means a power ramping step for a preferred random access process.

It should be noted that the message 3 repetition request is a PRACH used for requesting for msg3 repetition transmission. In other words, a random access response (Random Access Response, RAR) replied under such PRACH may schedule a repetition transmission of a msg3.

(3) Offset of a second target power level at which the network side device expects to receive a PRACH transmission.

The second target power level may be a target power level at which the network side device expects to receive the PRACH transmission in a case that the terminal does not perform the PRACH repetition transmission.

(4) Offset of a second power ramping step for the PRACH transmission. The second power ramping step may be a power ramping step of the terminal for the PRACH transmission in a case that the terminal does not perform the PRACH repetition transmission.

When selecting a PRACH resource for the PRACH repetition transmission, the terminal may preferentially select the parameter specially for the PRACH repetition transmission, for example, the first target power level and/or the first power ramping step. When selecting a PRACH resource for the PRACH initial transmission or the PRACH retransmission, the terminal may select a parameter for the PRACH initial transmission and retransmission, for example, the second target power level and/or the second power ramping step.

In an embodiment of this application, a condition for the terminal to use the first target power level is: A time-frequency resource for the PRACH repetition transmission in a case that the terminal performs the PRACH repetition transmission is not shared with a time-frequency resource for the PRACH transmission in a case that the terminal does not perform the PRACH repetition transmission. The time-frequency resource may be understood as a time-frequency resource required for transmitting one PRACH transmission sequence, for example, a PRACH occasion (Occasion), RO for short. The PRACH occasion means a time-frequency resource required for transmitting one PRACH transmission sequence.

In other words, the first target power level specially for the PRACH repetition transmission is configured when a time-frequency resource for the PRACH repetition transmission in a case that the terminal performs the PRACH repetition transmission is not shared with a time-frequency resource for the PRACH transmission (for example, the PRACH initial transmission and the PRACH retransmission) in a case that the terminal does not perform the PRACH repetition transmission.

In an embodiment of this application, a condition for the terminal to use the first power ramping step is:
A time-frequency resource for the PRACH repetition transmission in a case that the terminal performs the PRACH repetition transmission is not shared with a time-frequency resource for the PRACH transmission in a case that the terminal does not perform the PRACH repetition transmission.

In other words, the first power ramping step specially for the PRACH repetition transmission is configured when a time-frequency resource for the PRACH repetition transmission in a case that the terminal performs the PRACH repetition transmission is not shared with a time-frequency resource for the PRACH transmission (for example, the PRACH initial transmission and the PRACH retransmission) in a case that the terminal does not perform the PRACH repetition transmission.

In an embodiment of this application, a path loss of a first target PRACH transmission is determined based on path loss estimation performed before a first symbol of a first PRACH transmission, the first target PRACH transmission includes at least two PRACH transmissions in the PRACH repetition transmission, and the first PRACH transmission is a PRACH first transmitted in the first target PRACH transmission.

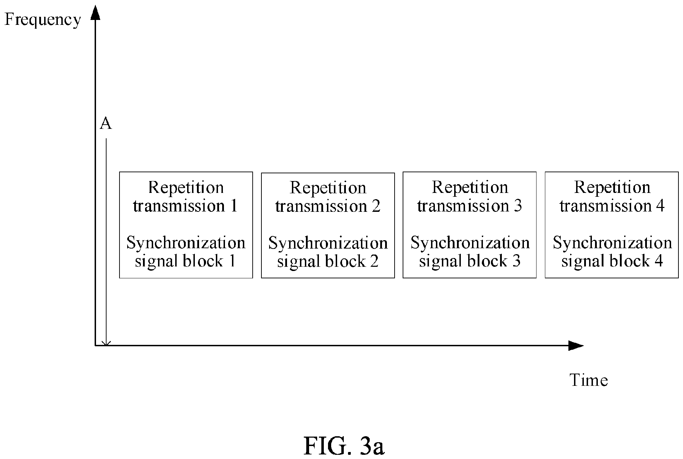

The first PRACH transmission may be the first or the N^{th} PRACH transmission in the PRACH repetition transmission. N is greater than or equal to 1 and less than or equal to number of transmissions in the PRACH repetition transmission, and N is an integer. If path loss estimation of all PRACH transmissions in the PRACH repetition transmission is estimated by using a same reference signal before the first symbol of the first PRACH transmission, power obtained by each PRACH transmission is calculated, and a same path loss may be expected. As shown in FIG. 3a, a PRACH repetition transmission includes four PRACH transmissions, which are {Rep1, Rep2, Rep3, Rep4}. Path loss estimation of the four PRACH transmissions is based on a synchronization signal block (Synchronization Signal and PBCH block, SSB) 1, and estimation is performed before the first PRACH transmission. Path loss estimation time of A shown in FIG. 3a is before the first PRACH transmission.

In an embodiment of this application, a path loss of a second target PRACH transmission is determined based on path loss estimation performed before a first symbol of the second target PRACH transmission, and the second target PRACH transmission is any PRACH transmission in the PRACH repetition transmission.

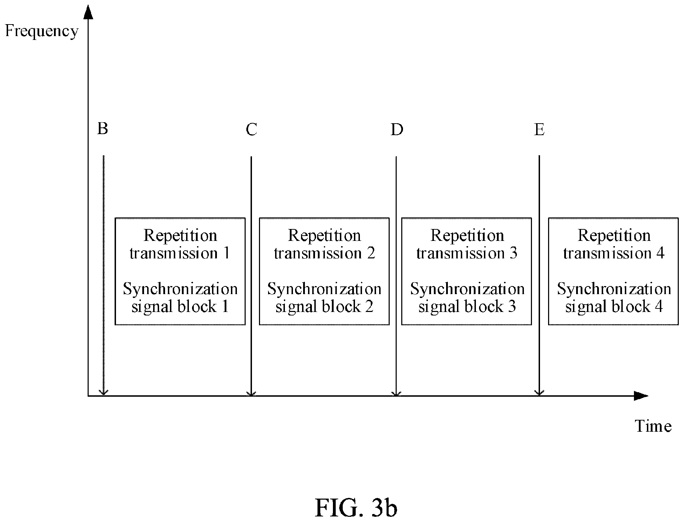

In other words, a path loss of each PRACH transmission is estimated before a first symbol of the PRACH transmission. As shown in FIG. 3b, a PRACH repetition transmission includes four PRACH transmissions, which are {Rep 1, Rep2, Rep3, Rep4}. The four PRACH transmissions are respectively associated with an SSB1, an SSB2, an SSB3, and an SSB4. A path loss of a Rep i is obtained by estimating before a first symbol of the Rep i based on an SSB i. i is equal to 1 to 4, that is, path loss estimation time B, C, D, and E shown in FIG. 3b.

In an embodiment of this application, a path loss of the PRACH repetition transmission is determined based on at least one of the following:
(1) A path loss of each PRACH transmission in the PRACH repetition transmission is determined by measuring a same target reference signal (for example, an SSB or channel state information reference signal (Channel State Information Reference Signal, CSI-RS)). In other words, a path loss of each PRACH transmission in the PRACH repetition transmission is measured by using a same reference signal.

The target reference signal includes at least one of the following:
a reference signal associated with a second PRACH transmission, where the second PRACH transmission is a PRACH transmission first transmitted in a fourth target PRACH transmission, and the fourth target PRACH transmission includes at least two PRACH transmissions in the PRACH repetition transmission; and the second PRACH transmission may be the first or the N^{th} PRACH transmission in the PRACH repetition transmission;
a reference signal that is measured and determined by the terminal and that has the highest reference signal receiving power (Reference Signal Receiving Power, RSRP) in the reference signal set;
a reference signal that is measured and determined by the terminal and that has the lowest RSRP in the reference signal set;
a reference signal that is measured and determined by the terminal and that has the largest path loss in the reference signal set; and
a reference signal that is measured and determined by the terminal and that has the smallest path loss in the reference signal set.

The reference signal set includes reference signals associated with PRACH transmissions in the PRACH repetition transmission.

(2) A path loss of a third target PRACH transmission is determined by measuring a reference signal associated with the third target PRACH transmission, and the third target PRACH transmission is any PRACH transmission in the PRACH repetition transmission. In other words, a path loss of each PRACH transmission is determined by measuring a reference signal (for example, an SSB or CSI-RS) associated with each PRACH transmission.

In a case that each PRACH transmission in the PRACH repetition transmission is associated with a same reference signal, path loss estimation is performed on each PRACH transmission by using the same reference signal. In a case that each PRACH transmission in the PRACH repetition transmission is associated with different reference signals, path loss estimation is performed on each PRACH transmission by using different reference signals.

In this embodiment of this application, parameter configuration specially for the PRACH repetition transmission is used, so that the network side device may be configured with higher power configuration than a priority used in a case that the terminal does not perform the PRACH repetition transmission, thereby improving reliability of reception of the PRACH transmission.

This embodiment of this application provides a flexible path loss estimation method. For example, path loss estimation of a specific PRACH transmission in the PRACH repetition transmission may be used in all PRACH transmissions. In this way, complexity of path loss estimation can be reduced, thereby reducing a terminal loss. In addition, in a case that the transmit power of the PRACH transmissions in the PRACH repetition transmission is the same, the network side device can easily select an optimal PRACH transmission (for example, having the highest receiving power) based on receiving power for use in determining sending of a downlink random access response.

In addition, in the flexible path loss estimation method, path loss estimation may also be performed on each PRACH transmission in the PRACH repetition transmission. In this way, accuracy of the path loss estimation can be ensured, so that it can be ensured that receiving power of each PRACH transmission received by the network side device is expected by the network side device.

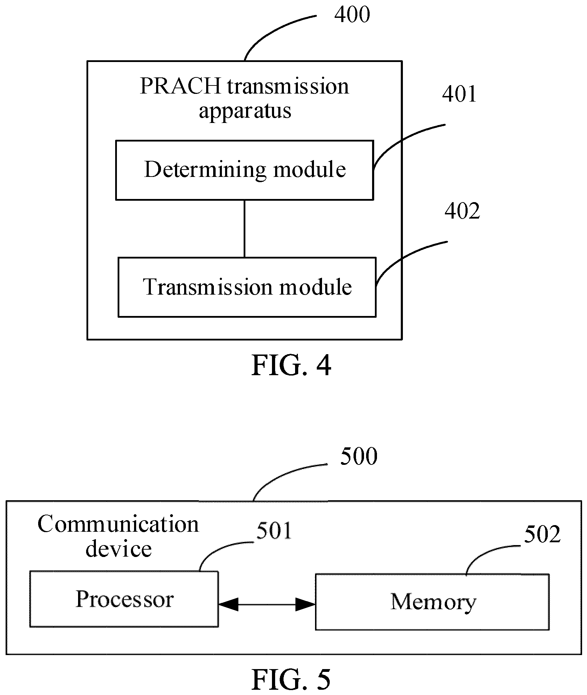

The PRACH transmission method provided in FIG. 2 of this application may performed by a PRACH transmission apparatus 400. An example in which the PRACH transmission apparatus 400 performs the PRACH transmission method is used in an embodiment of this application to describe the apparatus for the PRACH transmission method provided in embodiments of this application. As shown in FIG. 4, an embodiment of this application provides a PRACH transmission apparatus 400, including:
a determining module 401, configured to determine, based on a target parameter, transmit power of a physical random access channel PRACH repetition transmission, where the target parameter includes at least one parameter for the PRACH repetition transmission; and
a transmission module 402, configured to perform the PRACH repetition transmission based on the transmit power of the PRACH repetition transmission.

Further, the at least one parameter for the PRACH repetition transmission includes at least one of the following:
a first target power level at which a network side device expects to receive the PRACH repetition transmission;
a first power ramping step for the PRACH repetition transmission;
offset of a second target power level at which the network side device expects to receive a PRACH transmission; and
offset of a second power ramping step for the PRACH transmission.

Further, the second target power level is a target power level at which the network side device expects to receive the PRACH transmission in a case that a terminal does not perform the PRACH repetition transmission.

Further, the second power ramping step is a power ramping step of the terminal for the PRACH transmission in a case that the terminal does not perform the PRACH repetition transmission.

Further, the first power ramping step includes:
a power ramping step configured for the PRACH transmission in a case that the terminal sends a message 3 repetition request;
   or
a power ramping step for a preferred random access process in a case that the terminal does not perform the PRACH repetition transmission.

Further, a condition for the terminal to use the first target power level is:

A time-frequency resource for the PRACH repetition transmission in a case that the terminal performs the PRACH repetition transmission is not shared with a time-frequency resource for the PRACH transmission in a case that the terminal does not perform the PRACH repetition transmission.

Further, a condition for the terminal to use the first power ramping step is:

A time-frequency resource for the PRACH repetition transmission in a case that the terminal performs the PRACH repetition transmission is not shared with a time-frequency resource for the PRACH transmission in a case that the terminal does not perform the PRACH repetition transmission.

Further, a path loss of a first target PRACH transmission is determined based on path loss estimation performed before a first symbol of a first PRACH transmission, the first target PRACH transmission includes at least two PRACH transmissions in the PRACH repetition transmission, and the first PRACH transmission is a PRACH first transmitted in the first target PRACH transmission;
and/or
a path loss of a second target PRACH transmission is determined based on path loss estimation performed before a first symbol of the second target PRACH transmission, and the second target PRACH transmission is any PRACH transmission in the PRACH repetition transmission.

Further, a path loss of the PRACH repetition transmission is determined based on at least one of the following:
a path loss of each PRACH transmission in the PRACH repetition transmission is determined by measuring a same target reference signal; and
a path loss of a third target PRACH transmission is determined by measuring a reference signal associated with the third target PRACH transmission, and the third target PRACH transmission is any PRACH transmission in the PRACH repetition transmission.

Further, the target reference signal includes at least one of the following:
a reference signal associated with a second PRACH transmission, where the second PRACH transmission is a PRACH transmission first transmitted in a fourth target PRACH transmission, and the fourth target PRACH transmission includes at least two PRACH transmissions in the PRACH repetition transmission;
a reference signal that is measured and determined by the terminal and that has the highest reference signal receiving power RSRP in a reference signal set;
a reference signal that is measured and determined by the terminal and that has the lowest RSRP in the reference signal set;
a reference signal that is measured and determined by the terminal and that has the largest path loss in the reference signal set; and
a reference signal that is measured and determined by the terminal and that has the smallest path loss in the reference signal set.

The reference signal set includes reference signals associated with PRACH transmissions in the PRACH repetition transmission.

The PRACH transmission apparatus 400 in this embodiment of this application may be an electronic device, for example, an electronic device having an operating system, or may be a component in an electronic device, for example, an integrated circuit or a chip. The electronic device may be a terminal, or may be another device other than a terminal. For example, the terminal may include but is not limited to a type of the terminal 11 listed above, and the another device may be a server, a network attached storage (Network Attached Storage, NAS), or the like. This is not specifically limited in this embodiment of this application.

The PRACH transmission apparatus 400 provided in this embodiment of this application can implement processes implemented in the foregoing method embodiment in FIG. 2 and achieve the same technical effects. To avoid repetition, details are not described herein again.

Optionally, as shown in FIG. 5, an embodiment of this application further provides a communication device 500, including a processor 501 and a memory 502. The memory 502 stores a program or instructions executable on the processor 501. For example, in a case that the communication device 500 is a terminal, the program or the instructions, when executed by the processor 501, implements steps in the foregoing PRACH transmission method embodiment in FIG. 2 and achieve the same technical effects. Details are not described herein again.

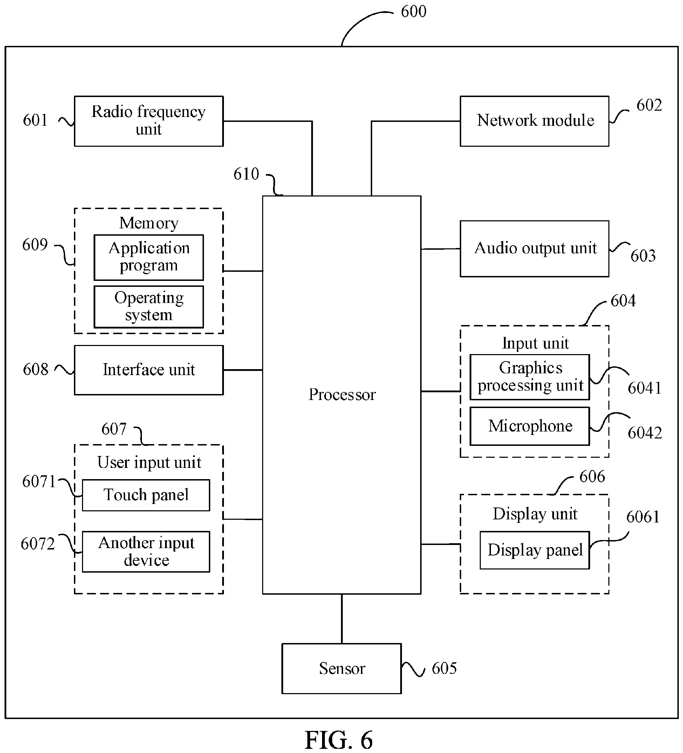

An embodiment of this application further provides a terminal, including a processor and a communication interface. The processor is configured to determine transmit power of a physical random access channel PRACH repetition transmission based on a target parameter. The target parameter includes at least one parameter for the PRACH repetition transmission. The communication interface is configured to perform the PRACH repetition transmission based on the transmit power of the PRACH repetition transmission. The terminal embodiment corresponds to the foregoing terminal side method embodiment. Implementation processes and implementation methods of the foregoing method embodiments may all be applied to the terminal embodiment, and the same technical effects can be achieved. Specifically, FIG. 6 is a schematic diagram of a hardware structure of a terminal for implementing this embodiment of this application.

The terminal 600 includes but is not limited to at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) supplying power to components. The power supply may be logically connected to the processor 610 via a power supply management system, to implement functions such as charge management, discharge management, and power consumption management by using the power supply management system. The terminal structure shown in FIG. 6 does not constitute a limitation on the terminal. The terminal may include more or fewer components than those shown in the figure, or some components are combined, or component arrangements are different. Details are not described herein again.

It should be understood that in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include but are not limited to a physical keyboard, a function key (such as a volume control key or a switch key), a trackball, a mouse, and a joystick. Details are not described herein again.

In this embodiment of this application, after receiving downlink data from a network side device, the radio frequency unit 601 may transmit the downlink data to the processor 610 for processing. In addition, the radio frequency unit 601 may send uplink data to the network side device. Generally, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may mainly include a first storage area for storing the programs or the instructions and a second storage area for storing the data. The first storage area may store an operating system, an application program or instructions (such as an audio play function and an image play function) required by at least one function, and the like. In addition, the memory 609 may include a volatile memory or a non-volatile memory. Alternatively, the memory 609 may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, the processor 610 may integrate an application processor and a modem processor. The application processor mainly processes operations related to the operating system, a user interface, an application program, and the like. The modem processor mainly processes wireless communication signals. For example, the modem processor is a baseband processor. It may be understood that the foregoing modem processor may alternatively be not integrated in the processor 610.

The processor 610 is configured to determine transmit power of a physical random access channel PRACH repetition transmission based on a target parameter. The target parameter includes at least one parameter for the PRACH repetition transmission.

The radio frequency unit 601 is configured to perform the PRACH repetition transmission based on the transmit power of the PRACH repetition transmission.

Further, the at least one parameter for the PRACH repetition transmission includes at least one of the following:
a first target power level at which a network side device expects to receive the PRACH repetition transmission;
a first power ramping step for the PRACH repetition transmission;
offset of a second target power level at which the network side device expects to receive a PRACH transmission; and
offset of a second power ramping step for the PRACH transmission.

Further, the second target power level is a target power level at which the network side device expects to receive the PRACH transmission in a case that the terminal does not perform the PRACH repetition transmission.

Further, the second power ramping step is a power ramping step of the terminal for the PRACH transmission in a case that the terminal does not perform the PRACH repetition transmission.

Further, the first power ramping step includes:
a power ramping step configured for the PRACH transmission in a case that the terminal sends a message 3 repetition request;
   or
a power ramping step for a preferred random access process in a case that the terminal does not perform the PRACH repetition transmission.

Further, a condition for the terminal to use the first target power level is:

A time-frequency resource for the PRACH repetition transmission in a case that the terminal performs the PRACH repetition transmission is not shared with a time-frequency resource for the PRACH transmission in a case that the terminal does not perform the PRACH repetition transmission.

Further, a condition for the terminal to use the first power ramping step is:

A time-frequency resource for the PRACH repetition transmission in a case that the terminal performs the PRACH repetition transmission is not shared with a time-frequency resource for the PRACH transmission in a case that the terminal does not perform the PRACH repetition transmission.

Further, a path loss of a first target PRACH transmission is determined based on path loss estimation performed before a first symbol of a first PRACH transmission, the first target PRACH transmission includes at least two PRACH transmissions in the PRACH repetition transmission, and the first PRACH transmission is a PRACH first transmitted in the first target PRACH transmission;
and/or
a path loss of a second target PRACH transmission is determined based on path loss estimation performed before a first symbol of the second target PRACH transmission, and the second target PRACH transmission is any PRACH transmission in the PRACH repetition transmission.

Further, a path loss of the PRACH repetition transmission is determined based on at least one of the following:
a path loss of each PRACH transmission in the PRACH repetition transmission is determined by measuring a same target reference signal; and
a path loss of a third target PRACH transmission is determined by measuring a reference signal associated with the third target PRACH transmission, and the third target PRACH transmission is any PRACH transmission in the PRACH repetition transmission.

Further, the target reference signal includes at least one of the following:
a reference signal associated with a second PRACH transmission, where the second PRACH transmission is a PRACH transmission first transmitted in a fourth target PRACH transmission, and the fourth target PRACH transmission includes at least two PRACH transmissions in the PRACH repetition transmission;
a reference signal that is measured and determined by the terminal and that has the highest reference signal receiving power RSRP in a reference signal set;
a reference signal that is measured and determined by the terminal and that has the lowest RSRP in the reference signal set;
a reference signal that is measured and determined by the terminal and that has the largest path loss in the reference signal set; and
a reference signal that is measured and determined by the terminal and that has the smallest path loss in the reference signal set.

The reference signal set includes reference signals associated with PRACH transmissions in the PRACH repetition transmission.

The terminal provided in this embodiment of this application can implement processes implemented in the foregoing method embodiment in FIG. 2 and achieve the same technical effects. To avoid repetition, details are not described herein again.

An embodiment of this application further provide a readable storage medium, having a program or instructions stored thereon. The program or the instructions, when executed by a processor, implement processes in the foregoing PRACH transmission method embodiment and achieve the same technical effects. To avoid repetition, details are not described herein again.

The processor is the processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, including a processor and a communication interface. The communication interface is coupled to the processor. The processor is configured to run a program or instructions to implement processes in the foregoing PRACH transmission method embodiment and achieve the same technical effects. To avoid repetition, details are not described herein again.

It should be understood that the chip mentioned in this embodiment of this application may also be referred to as a system-on-chip, a system chip, a chip system, a system-on-a-chip, or the like.

An embodiment of this application further provides a computer program/a program product, stored in a storage medium. The computer program/the program product is executed by at least one processor to implement processes in the foregoing PRACH transmission method embodiment and achieve the same technical effects. To avoid repetition, details are not described herein again.

Embodiments of this application have been described above with reference to the accompanying drawings. However, this application is not limited to the foregoing specific implementations, and the foregoing specific implementations are merely examples and are not restrictive. A person of ordinary skill in the art may make various variations under the teaching of this application without departing from aims and the protection scope of the claims of this application, all of which fall within the protection scope of this application.

## Claims

1. A PRACH transmission method, comprising:
determining, by a terminal, transmit power of a physical random access channel PRACH repetition transmission based on a target parameter, wherein the target parameter comprises at least one parameter for the PRACH repetition transmission; and
performing, by the terminal, the PRACH repetition transmission based on the transmit power of the PRACH repetition transmission.

2. The method according to claim 1, wherein the at least one parameter for the PRACH repetition transmission comprises at least one of the following:
a first target power level at which a network side device expects to receive the PRACH repetition transmission;
a first power ramping step for the PRACH repetition transmission;
offset of a second target power level at which the network side device expects to receive a PRACH transmission; and
offset of a second power ramping step for the PRACH transmission.

3. The method according to claim 2, wherein the second target power level is a target power level at which the network side device expects to receive the PRACH transmission in a case that the terminal does not perform the PRACH repetition transmission.

4. The method according to claim 2, wherein the second power ramping step is a power ramping step of the terminal for the PRACH transmission in a case that the terminal does not perform the PRACH repetition transmission.

5. The method according to claim 2, wherein the first power ramping step comprises:
a power ramping step configured for the PRACH transmission in a case that the terminal sends a message 3 repetition request;
or
a power ramping step for a preferred random access process in a case that the terminal does not perform the PRACH repetition transmission.

6. The method according to claim 2, wherein a condition for the terminal to use the first target power level is:
a time-frequency resource for the PRACH repetition transmission in a case that the terminal performs the PRACH repetition transmission is not shared with a time-frequency resource for the PRACH transmission in a case that the terminal does not perform the PRACH repetition transmission.

7. The method according to claim 2, wherein a condition for the terminal to use the first power ramping step is:
a time-frequency resource for the PRACH repetition transmission in a case that the terminal performs the PRACH repetition transmission is not shared with a time-frequency resource for the PRACH transmission in a case that the terminal does not perform the PRACH repetition transmission.

8. The method according to claim 1, wherein a path loss of a first target PRACH transmission is determined based on path loss estimation performed before a first symbol of a first PRACH transmission, the first target PRACH transmission comprises at least two PRACH transmissions in the PRACH repetition transmission, and the first PRACH transmission is a PRACH first transmitted in the first target PRACH transmission;
and/or
a path loss of a second target PRACH transmission is determined based on path loss estimation performed before a first symbol of the second target PRACH transmission, and the second target PRACH transmission is any PRACH transmission in the PRACH repetition transmission.

9. The method according to claim 1, wherein a path loss of the PRACH repetition transmission is determined based on at least one of the following:
a path loss of each PRACH transmission in the PRACH repetition transmission is determined by measuring a same target reference signal; and
a path loss of a third target PRACH transmission is determined by measuring a reference signal associated with the third target PRACH transmission, and the third target PRACH transmission is any PRACH transmission in the PRACH repetition transmission.

10. The method according to claim 9, wherein the target reference signal comprises at least one of the following:
a reference signal associated with a second PRACH transmission, wherein the second PRACH transmission is a PRACH transmission first transmitted in a fourth target PRACH transmission, and the fourth target PRACH transmission comprises at least two PRACH transmissions in the PRACH repetition transmission;
a reference signal that is measured and determined by the terminal and that has the highest reference signal receiving power RSRP in a reference signal set;
a reference signal that is measured and determined by the terminal and that has the lowest RSRP in the reference signal set;
a reference signal that is measured and determined by the terminal and that has the largest path loss in the reference signal set; and
a reference signal that is measured and determined by the terminal and that has the smallest path loss in the reference signal set, wherein
the reference signal set comprises reference signals associated with PRACH transmissions in the PRACH repetition transmission.

11. A PRACH transmission apparatus, comprising:
a determining module, configured to determine, based on a target parameter, transmit power of a physical random access channel PRACH repetition transmission, wherein the target parameter comprises at least one parameter for the PRACH repetition transmission; and
a transmission module, configured to perform the PRACH repetition transmission based on the transmit power of the PRACH repetition transmission.

12. The apparatus according to claim 11, wherein the at least one parameter for the PRACH repetition transmission comprises at least one of the following:
a first target power level at which a network side device expects to receive the PRACH repetition transmission;
a first power ramping step for the PRACH repetition transmission;
offset of a second target power level at which the network side device expects to receive a PRACH transmission; and
offset of a second power ramping step for the PRACH transmission.

13. The apparatus according to claim 11, wherein a path loss of a first target PRACH transmission is determined based on path loss estimation performed before a first symbol of a first PRACH transmission, the first target PRACH transmission comprises at least two PRACH transmissions in the PRACH repetition transmission, and the first PRACH transmission is a PRACH first transmitted in the first target PRACH transmission;
and/or
a path loss of a second target PRACH transmission is determined based on path loss estimation performed before a first symbol of the second target PRACH transmission, and the second target PRACH transmission is any PRACH transmission in the PRACH repetition transmission.

14. The apparatus according to claim 11, wherein a path loss of the PRACH repetition transmission is determined based on at least one of the following:
a path loss of each PRACH transmission in the PRACH repetition transmission is determined by measuring a same target reference signal; and
a path loss of a third target PRACH transmission is determined by measuring a reference signal associated with the third target PRACH transmission, and the third target PRACH transmission is any PRACH transmission in the PRACH repetition transmission.

15. A terminal, comprising a processor and a memory, wherein the memory stores a program or instructions executable on the processor, and the program or the instructions, when executed by the processor, implement steps of the PRACH transmission method according to any one of claims 1 to 10.

16. A readable storage medium, having a program or instructions stored thereon, wherein the program or the instructions, when executed by a processor, implement steps of the PRACH transmission method according to any one of claims 1 to 10.
